(19)

Europäisches
Patentamt
European
Patent Office
Office européen
des brevets

(11) **EP 3 746 751 B1**

(12) **EUROPEAN PATENT SPECIFICATION**

(45) Date of publication and mention
of the grant of the patent:
**05.10.2022 Bulletin 2022/40**

(21) Application number: **19707880.1**

(22) Date of filing: **01.02.2019**

(51) International Patent Classification (IPC):
***G01F 22/02*** *(2006.01)*

(52) Cooperative Patent Classification (CPC):
**G01F 22/02**

(86) International application number:
**PCT/IB2019/050819**

(87) International publication number:
**WO 2019/150316 (08.08.2019 Gazette 2019/32)**

(54) **MEASURING METHOD AND MEASURING STATION TO DETERMINE THE VOLUME OF LIQUID PRODUCT CONTAINED IN A DISPOSABLE CARTRIDGE FOR SMOKING ARTICLES**

MESSVERFAHREN UND MESSSTATION ZUR BESTIMMUNG DES VOLUMENS EINES IN EINER WEGWERFKARTUSCHE FÜR RAUCHARTIKEL ENTHALTENEN FLÜSSIGEN PRODUKTS

PROCÉDÉ DE MESURE ET STATION DE MESURE POUR DÉTERMINER LE VOLUME D'UN PRODUIT LIQUIDE CONTENU DANS UNE CARTOUCHE JETABLE POUR ARTICLES POUR FUMEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.02.2018 IT 201800002328**

(43) Date of publication of application:
**09.12.2020 Bulletin 2020/50**

(73) Proprietor: **G.D Società per Azioni
40133 Bologna (IT)**

(72) Inventors:
• **LAMBORGHINI, Gianpiero
44042 Cento (FE) (IT)**

• **FEDERICI, Luca
"deceased" (IT)**

(74) Representative: **Maccagnan, Matteo et al
Studio Torta S.p.A.
Via Viotti, 9
10121 Torino (IT)**

(56) References cited:
**EP-A1- 3 208 577      WO-A1-2006/009446
WO-A2-2015/140768   US-A- 4 112 738
US-B2- 7 810 371**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a measuring method and to a measuring station to determine the volume of liquid product contained in a disposable cartridge for smoking articles (in particular for electronic cigarettes).

PRIOR ART

Disposable cartridges for electronic cigarettes containing a dose of liquid product which contains nicotine and possible aromas have been recently proposed. When used, the electronic cigarette heats up the disposable cartridge causing the slow volatilisation (vaporisation) of the liquid product so as to generate vapours that are then inhaled by the smoker.

The production of such disposable cartridges involves making the disposable cartridges with an open upper end, filling the disposable cartridges with a calibrated quantity of liquid product and then capping the disposable cartridges by putting on the open upper end a cap which is permeable to vapours (i.e. a cap that prevents the spilling of the liquid product, but that does not hinder the release of the vapours generated by the heating of the liquid product).

The most critical production phase of disposable cartridges is their filling with liquid product, since the entry of liquid product inside a disposable cartridge is relatively slow because the liquid product is viscous (i.e. having a high density that slows down the movements of the liquid product itself) and since each cartridge contains a small volume of liquid product (indicatively a few fractions of a millimetre) that must be measured out extremely accurately (the tolerable error is below 3-5%).

In order to guarantee the compliance of the disposable cartridges, i.e. to guarantee that each disposable cartridge contains the desired quantity of liquid product, a measurement of the quantity of liquid product contained in each disposable cartridge is carried out between the filling and the capping of the disposable cartridges. Non-compliant disposable cartridges, i.e. disposable cartridges containing a quantity of liquid which is significantly different from the desired quantity, are eliminated after the measuring station in which the quantity of liquid product contained in each disposable cartridge is measured. Presently and as for example described in patent application WO2015140768A1, in order to measure the quantity of liquid product contained in each disposable cartridge a weighing is carried out that involves measuring the weight of each empty disposable cartridge before a filling station (to determine the *"tare"*), measuring the weight of each filled disposable cartridge after the filling station (to determine the *"gross weight"*), and then calculating by means of a subtraction the weight of the quantity of liquid product contained in each disposable cartridge. However, such a methodology is costly and complex since it requires two twin weighing stations (arranged respectively before and after the filling station); moreover, such a methodology is relatively imprecise given that subtracting two relatively similar weights amplifies the related error which is made when weighing the quantity of liquid product contained in each disposable cartridge.

DESCRIPTION OF THE INVENTION

The purpose of the present invention is to provide a measuring method and a measuring station, to determine the volume of liquid product contained in a disposable cartridge for smoking articles, which do not suffer from the drawbacks described above and, in particular, which allow to obtain an accurate measurement of the volume of liquid product contained in a disposable cartridge.

In accordance with the present invention, a measuring method and a measuring station are provided to determine the volume of liquid product contained in a disposable cartridge for smoking articles, according to the accompanying claims.

The claims describe preferred embodiments of the present invention which form an integral part of the present description.

BRIEF DESCRIPTION OF DRAWINGS

The present invention will now be described with reference to the accompanying drawings, illustrating a non-limiting embodiment thereof, in which:

- • Figure 1 is a schematic view of a disposable cartridge for electronic cigarettes;
- • Figure 2 is a schematic view of a manufacturing machine that produces the disposable cartridge for electronic cigarettes of Figure 1;
- • Figure 3 is a schematic view of a measuring station of the manufacturing machine of Figure 2;

- • Figures 4 and 5 are respective schematic views of the measuring station of Figure 3 during the determination of the volume of liquid product contained in a disposable cartridge; and
- • Figure 6 is a graph which shows the trend over time of the pressure inside a measuring chamber of the measuring station of Figure 3 as the volume of liquid product contained in a disposable cartridge varies.

PREFERRED EMBODIMENTS OF THE INVENTION

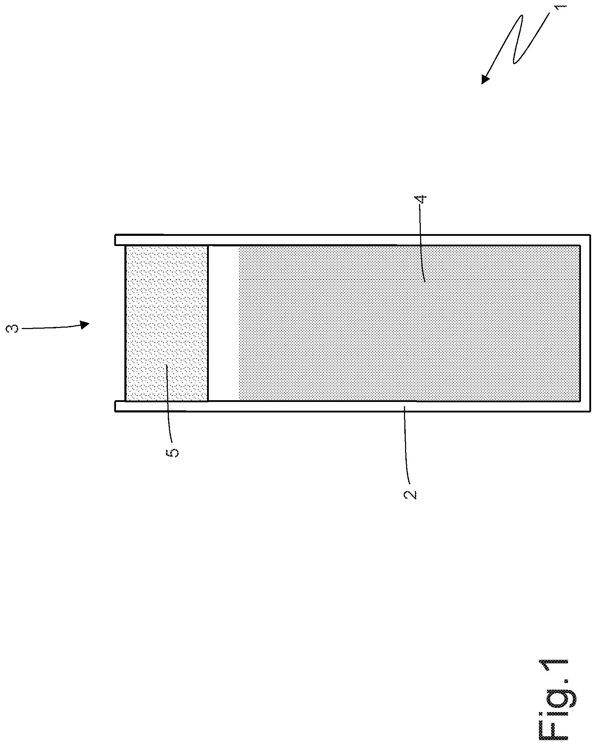

In Figure 1 a disposable cartridge for electronic cigarettes is designated as a whole by reference numeral 1. The disposable cartridge 1 comprises a cup-shaped base 2 and has an open upper end 3. The base 2 contains a dose of a viscous liquid product 4 which contains nicotine and possible aromas. The open upper end 3 of the base 2 is engaged by a cap 5 which is permeable to vapours (meaning that it prevents the spilling of the liquid product 4, but does not hinder the release of the vapours generated by the heating of the liquid product 4).

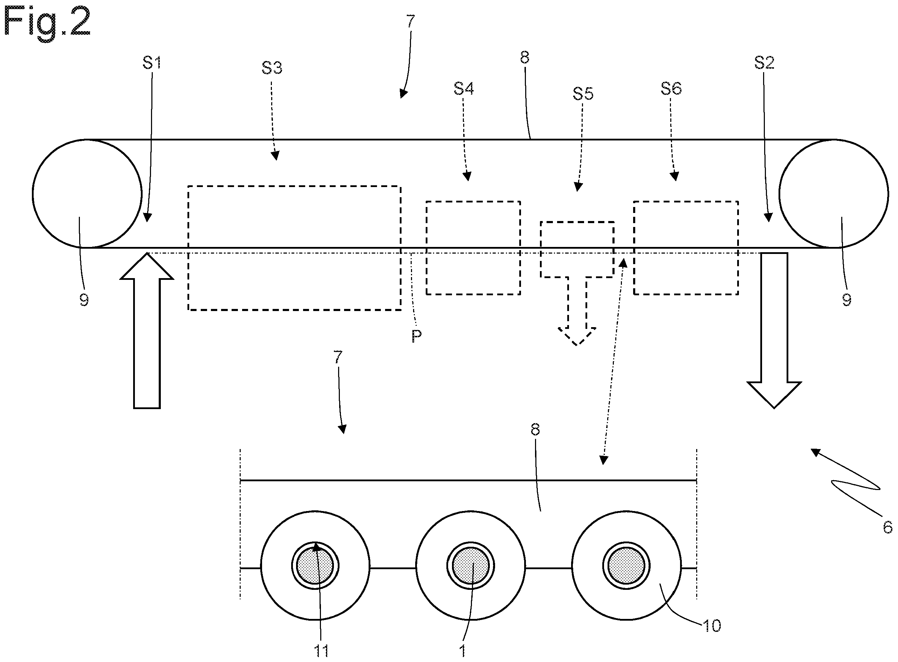

In Figure 2 a manufacturing machine that produces the disposable cartridge 1 for electronic cigarettes described above is designated as a whole by reference numeral 1. The manufacturing machine 6 comprises a conveyor 7 that moves the disposal cartridges 1 along a rectilinear configuration path P, which is arranged horizontally, with intermittent motion, i.e. a motion that involves a cyclical succession of motion phases, in which the conveyor 7 is moving, and of rest phases, in which the conveyor 7 is not operating. In the embodiment shown in Figure 2, the conveyor 7 is a belt conveyor having a flexible belt 8 which is looped around two end pulleys 9 that are arranged at the opposite ends of the conveyor 7 and hence at the opposite ends of the configuration path P. The belt 8 of the conveyor 7 supports a plurality of cylindrical supporting heads 10, each one having a seat 11 designed to house a cartridge 1. In accordance with an alternative embodiment which is not shown, the conveyor 7 could be a wheel conveyor.

The conveyor path P extends between an entry station S1 in which the empty bases 2 of the cartridges 1 are inserted inside the seats 11 of the corresponding heads 10 of the conveyor 7 and an exit station S2 in which the full cartridges 1 are extracted from the seats 11 of the corresponding heads 10 of the conveyor 7.

The manufacturing machine 6 comprises a filling station S3 which is arranged along the configuration path P immediately after the entry station S1 and in which in each cartridge 1 the corresponding dose of the liquid product 4 is fed from above; the filling station S3 typically comprises a plurality of dispensers that operate simultaneously (i.e. in tandem) to fill various cartridges 1 at once.

The manufacturing machine 6 comprises a measuring station S4 that is arranged along the configuration path P immediately after the filling station S3 and in which the volume of liquid product 4 contained in each cartridge 1 is determined.

The manufacturing machine 6 comprises a disposal station S5 that is arranged along the configuration path P immediately after the measuring station S4 and into which the non-compliant cartridges 1 (i.e. cartridges 1 containing a quantity of liquid product 4 significantly different from the desired quantity) are eliminated (i.e. removed from the configuration path P and sent to a waste collection container).

Along the configuration path P visual control stations may be provided, in which the cartridges 1 are inspected by means of cameras to detect possible visible faults; clearly also the visual control stations can signal to the disposal station S5 possible non-compliant cartridges 1 (i.e. cartridges 1 having visible faults).

Finally, the manufacturing machine 6 comprises a capping station S6 which is arranged along the configuration path P, immediately after the disposal station S5 and in which the corresponding cap 5 is put on each base 2.

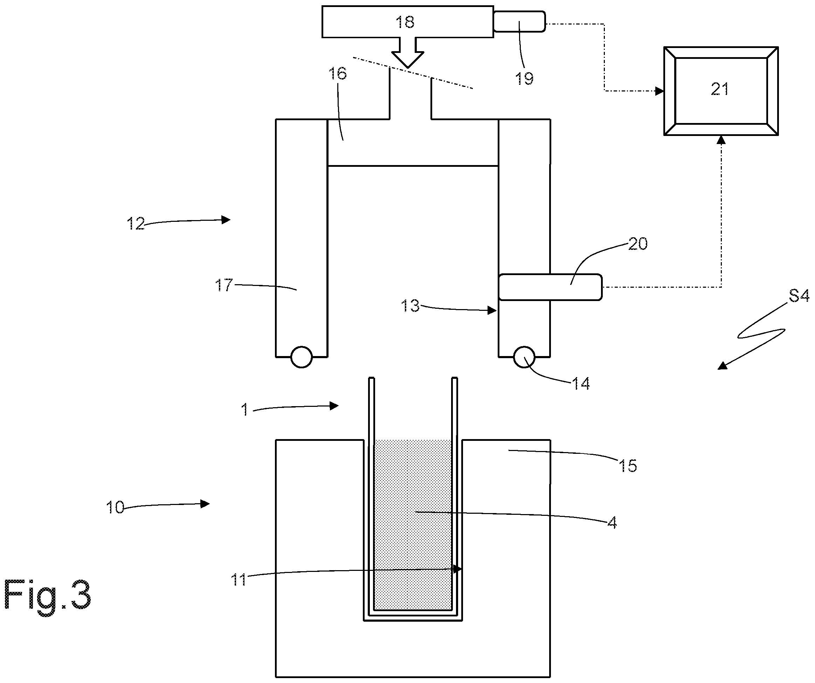

According to what is shown in Figure 3, the measuring station S4 comprises at least one cylindrical upper body 12 that is designed to couple with a corresponding head 10 (that is a lower body) to define (delimit) with the head 10 itself a measuring chamber 13 which contains the cartridge 1 housed in the seat 11 of the head 10. As was previously mentioned and as is shown in Figure 3, the cartridge 1 housed in the seat 11 of the head 10 contains a dose of liquid product 4 with an unknown volume and has the open upper end 3; consequently, the liquid product 4 communicates with the inner volume of the measuring chamber 13.

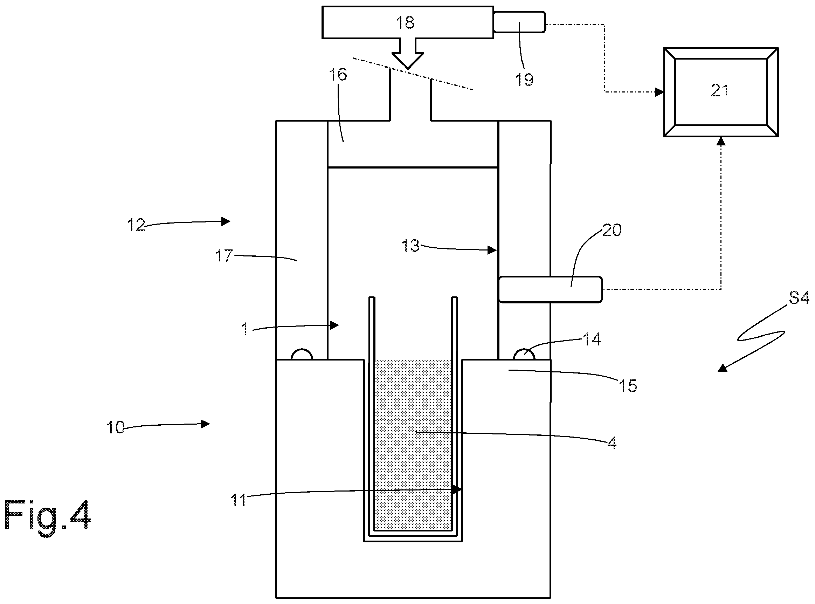

Initially and as shown in Figure 3, the upper body 12 is far from the corresponding head 10 (that is a lower body) to allow the movement of the head 10 along the filling path P; when the head 10 stops inside the measuring station S4 (as shown in Figure 4), the upper body 12 lowers itself (i.e. it moves downwards with a vertical movement) until it rests against the head 10 consequently closing and sealing the measuring chamber 13. In order to guarantee the leakproofness of the measuring chamber 13, the upper body 12 is provided with an annular sealing gasket 14 that presses against the corresponding head 10 (clearly the sealing gasket 14 could alternatively be carried by the head 10).

The measuring chamber 13 has a cylindrical shape that is delimited by a circular lower base wall 15 which is part of the head 10 and by a circular upper base wall 16 that is parallel to and opposite the lower base wall 15 and is part of the upper body 12; moreover, the measuring chamber 13 is delimited by a lateral tubular wall 17 which is part of the upper body 12. The seat 11 that houses the cartridge 1 is arranged in the centre of the lower base wall 15 of the head 10.

The upper base wall 16 is axially mounted movable inside the upper body 12 to axially move (i.e. parallel to the central axis of symmetry of the upper body 12) controlled by an actuator 18 (for example an electric motor controlled step-by-step or brushless) so as to change the inner volume of the measuring chamber 13 (according to the modes that will be illustrated below); in other words, the upper base wall 16 is movable inside the upper body 12 to act like a piston that modifies the inner volume of the measuring chamber 13 compressing the air contained inside the measuring chamber 13 itself.

A position sensor 19 that is designed to measure the position of the upper base wall 16 itself is preferably associated with the upper base wall 16; the position sensor 19 can be directly physically connected to the upper base wall 16 or it can be physically connected to the actuator 18 (as shown in Figure 3).

The upper body 12 supports a pressure sensor 20 that is designed to measure the inner pressure of the measuring chamber 13.

The measuring station S4 comprises an electronic control unit 21 that receives the measurement of the position sensor 19, receives the measurement of the pressure sensor 20, controls the actuator 18 to change the inner volume of the measuring chamber 13 and determines (according to modes that will be described below) the volume of the liquid product 4 present in the cartridge 1 that is inside the measuring chamber 13.

According to a preferred, but non-limiting, embodiment, the measuring station S4 comprises a plurality of measuring chambers 13 that are arranged in series along the filling path P and operate simultaneously (i.e. in tandem) to control various cartridges 1 at once.

The operation of the measuring station S4 to determine the volume of liquid product 4 contained in a disposable cartridge 1 housed in the seat 11 of a head 10 that has stopped at the measuring station S4 is described below (as shown in Figure 3).

When the head 10 that supports the cartridge 1 stops at the measuring station S4 (as shown in Figure 3), the upper body 12 is far from the head 10 (a condition required for allowing the movement of the head 10 along the filling path P). Once the head 10 that supports the cartridge 1 has stopped at the measuring station S4 (as shown in Figure 3), the upper body 12 lowers itself (i.e. it moves vertically downwards) to touch the head 10 and then seals the measuring chamber 13 in a tight manner around the cartridge 1 (as shown in Figure 4). It is important to emphasise that the measuring chamber 13 can be closed around the cartridge 1 (as shown in Figure 4) by keeping the head 10 still and moving the upper body 12, keeping the upper body 12 still and moving the head 10, or moving both the head 10 and the upper body 12.

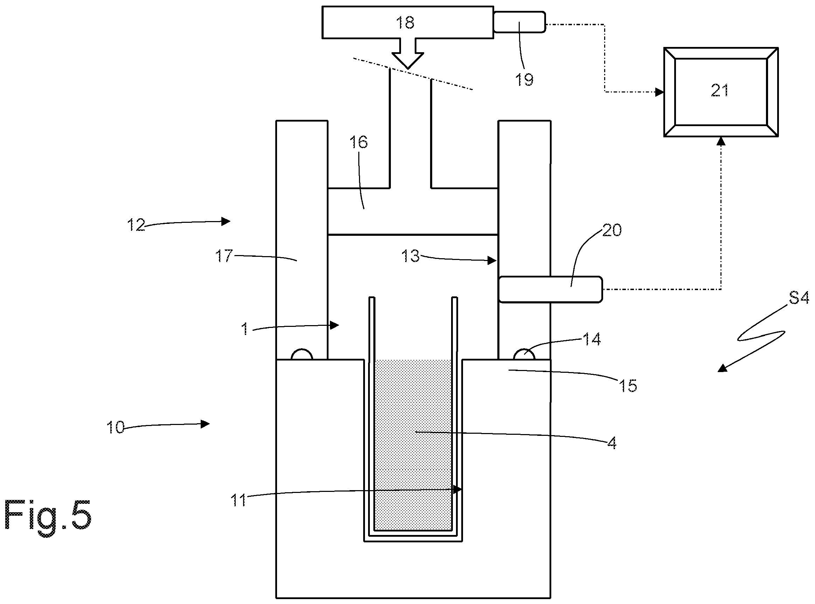

Once the measuring chamber 13 has been sealed around the cartridge 1, the control unit 21 activates the actuator 18 in order to move the upper base wall 16 and then change (i.e. reduce) the volume of the measuring chamber 13 (as shown in Figure 5). The change (reduction) of the volume of the measuring chamber 13 (that is leakproof, i.e. pneumatically isolated from the surrounding environment) determines an increase in the pressure inside the measuring chamber 13; to a first approximation, it is possible to assume that the volume and pressure variations of the measuring chamber 13 are in accordance with the general equation of state for ideal gases (also known as the ideal gas law):

$$P\,V = n\,R\,T$$

P    pressure inside the measuring chamber 13;
V    volume inside the measuring chamber 13;
N    quantity of gas (air) contained inside the measuring chamber 13;
R    universal gas constant;
T    absolute temperature inside the measuring chamber 13.

The inner volume of the measuring chamber 13 is affected (modified) by the volume of liquid product 4 present in the cartridge 1 given that the cartridge 1 is open at the top and therefore the free surface of the liquid product 4 present in the cartridge 1 constitutes a delimitation of the inner volume of the measuring chamber 13; consequently, the greater the quantity of liquid product 4 present in the cartridge 1, the lesser is the inner volume of the measuring chamber 13 and vice versa. Hence, it is possible to correlate the volume variation $\Delta V$ of the measuring chamber 13 and/or the pressure variation $\Delta P$ in the measuring chamber 13 due to the volume change of the measuring chamber 13 with the volume of liquid product 4 present in the cartridge 1, i.e. it is possible to determine (quite accurately) the volume of the dose of liquid product 4 contained in the cartridge 1 based on the volume variation $\Delta V$ and/or the pressure variation $\Delta P$ due to the volume change of the measuring chamber 13.

According to a possible embodiment, the volume of the measuring chamber 13 is changed by means of a predetermined and known volume variation $\Delta V$ to obtain an unknown pressure variation $\Delta P$; in other words, the movement of the upper base wall 16 is predetermined and known (as for example a 10mm run) so as to give a resultant predetermined and known volume variation $\Delta V$ and an unknown pressure variation $\Delta P$ (since that it is affected by the actual volume of liquid product present in the cartridge 1: the greater the volume of liquid product 4 present in the cartridge 1, the greater, ceteris paribus, the pressure variation $\Delta P$). The control unit 21 uses the position sensor 19 to control (verify) that the volume variation $\Delta V$ is actually equal to the desired value and uses the pressure sensor 20 to cyclically measure the pressure variation $\Delta P$ inside the measuring chamber 13 due to the volume change; consequently, the control unit 21 determines the volume of liquid product 4 contained in the cartridge 1 based on the pressure variation $\Delta P$ due to the volume change.

According to an alternative embodiment, the volume of the measuring chamber 13 is changed by means of a predetermined unknown volume variation $\Delta V$ to obtain a predetermined and known pressure variation $\Delta P$; in other words, the movement of the upper base wall 16 is unknown so as to give a predetermined and known pressure variation $\Delta P$ (for example 1 bar, i.e. the base wall 16 is halted when the pressure variation $\Delta P$ has reached the value of 1 bar) and consequently the volume variation $\Delta V$ is unknown (since it is affected by the actual volume of liquid product 4 present in the cartridge 1: the greater the quantity of liquid product 4 present in the cartridge 1, the lesser, ceteris paribus, the volume variation $\Delta V$). The control unit 21 uses the pressure sensor 20 to determine when to halt the movement of the upper base wall 16 (i.e. when to halt the volume change of the measuring chamber 13), that is to control (verify) that the pressure variation $\Delta P$ is actually equal to the desired value and uses the position sensor 19 to cyclically measure the volume variation $\Delta V$ inside the measuring chamber 13 due to the volume change; consequently, the control unit 21 determines the volume of the dose of liquid product 4 contained in the cartridge 1 based on the volume variation ΔV due to the volume change.

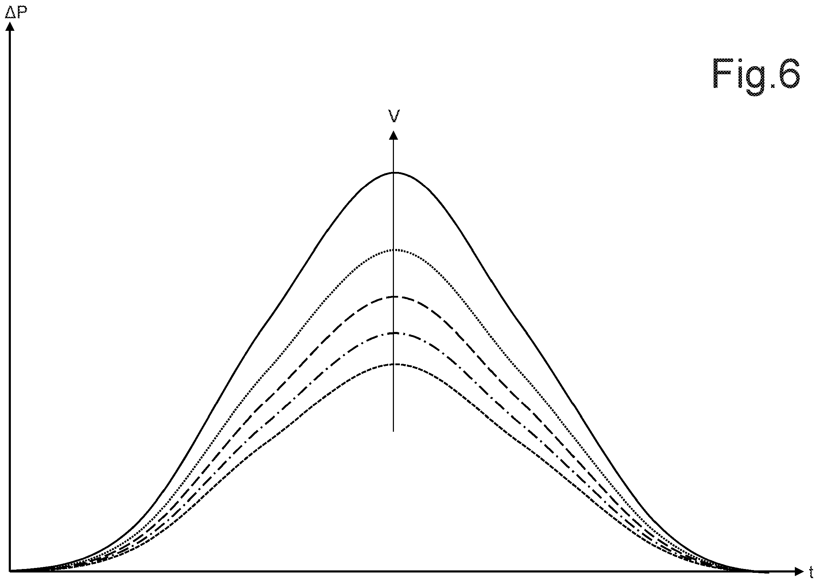

According to a possible embodiment, the volume variation ΔV of the measuring chamber 13 and/or the pressure variation ΔP in the measuring chamber 13 are continuously determined during the entire volume change (i.e. during the entire volume change from a maximum volume to a minimum volume and vice versa) so as to obtain a trend over time (of the type shown in Figure 6) that is bell-shaped (i.e. to obtain a bell-shaped variation curve). Alternatively, the volume variation ΔV of the measuring chamber 13 and/or the pressure variation ΔP in the measuring chamber 13 are determined only once when the volume in the measuring chamber 13 has reached the minimum volume (i.e. when the volume variation ΔV of the measuring chamber 13 has reached the maximum value).

According to a possible, but non-limiting, embodiment, the volume change of the measuring chamber 13 involves a constant change of speed over time; in other words, the volume change of the measuring chamber 13 is obtained by changing the base wall 16 at a constant velocity.

According to a possible embodiment, the control unit 21 also determines the room temperature and/or the room humidity and determines the volume of the dose of liquid product 4 contained in the cartridge 1 also based on the room temperature and/or on the room humidity. The room temperature (i.e. the air contained in the measuring chamber 13 that comes from the surrounding environment) directly affects the relation between the volume variation ΔV of the measuring chamber 13 and the pressure variation ΔP in the measuring chamber 13 as established by the general equation of state for ideal gases; it is important to observe that in the general equation of state for ideal gases the temperature is absolute (i.e. in Kelvin) and therefore a variation of for instance 10°C has in any case a relatively small impact (of the order of a few percentage points) on the relation between the volume variation ΔV of the measuring chamber 13 and the pressure variation ΔP in the measuring chamber 13. The room humidity (that is the air contained in the measuring chamber 13 that comes from the surrounding environment) affects the quantity of gas present in the measuring chamber 13 and therefore directly affects the relation between the volume variation ΔV of the measuring chamber 13 and the pressure variation ΔP in the measuring chamber 13 as established by the general equation of state for ideal gases; it is important to observe that the impact of a humidity variation on the relation between the volume variation ΔV of the measuring chamber 13 and the pressure variation ΔP in the measuring chamber 13 is in any case relatively small (of the order of a few percentage points).

It is possible to calculate the volume of liquid product 4 present in the cartridge 1 only by means of mathematical formulae that use the volume variation ΔV

of the measuring chamber 13 and the pressure variation ΔP in the measuring chamber 13. However, according to a preferred but non-limiting embodiment, a calibration of the measuring chamber 13 so as to experimentally determine a relation between the volume of the dose of liquid product 4 contained in the cartridge 1 and the volume variation ΔV and/or the pressure variation ΔP due to the volume change is generally carried out, by means of sample cartridges 1 containing respective doses of liquid product 4 with a known volume and during an initial step of installation and calibration of the pre-operational manufacturing machine 6; the result of this calibration is for example a bundle of curves of the type illustrated in Figure 6 that show the trend over time of the pressure variation ΔP at various volumes of liquid product 4 and following a predetermined and known (always constant) volume variation ΔV. It is clearly possible to determine various families of calibration curves at various values of room temperature and/or various values of room humidity.

Using the calibration curves which have been obtained experimentally it is possible to determine the volume of the dose of liquid product 4 contained in the cartridge 1 by means of a comparison between the measured curve and the calibration curves obtained experimentally (possibly by interpolating the two calibration curves that contain the measured curve).

In the embodiment shown in the accompanying Figures, the volume change of the measuring chamber 13 is obtained by moving the upper base wall 16 and keeping the lower base wall 15 still. According to alternative embodiments which are not shown, the volume change of the measuring chamber 13 is obtained by moving the lower base wall 15 and keeping the upper base wall still or by moving both base walls 15 and 16. There are clearly numerous constructive solutions to obtain the movement of the upper base wall 16 and/or of the lower base wall 15 and they are on a par in determining an (accurately measurable) volume variation ΔV of the measuring chamber 13.

In the embodiment shown in the accompanying Figures, the volume of the measuring chamber 13 is reduced by the movement of the upper base wall 16 (determining an increase of the pressure inside the sealed chamber 13); according to an alternative embodiment which is not shown, the volume of the measuring chamber 13 is increased by the movement of the upper base wall 16 (determining a reduction of the pressure inside the sealed chamber 13).

The embodiments described herein can be combined without departing from the scope of protection of the present invention as defined by the appended claims.

The measuring station S4 described above has numerous advantages.

Firstly, the measuring station S4 described above allows to determine extremely accurately the volume of the dose of liquid product 4 contained in each cartridge 1. Moreover, the measuring station S4 described above is relatively simple and economical since it is only arranged after the filling station S3 and has components (actuator 18, sensors 19 and 20) that are readily available on the market.

**Claims**

1. A measuring method to determine the volume of liquid product (4) contained in a disposable cartridge (1) for smoking articles;

   the measuring method comprises the step of inserting the cartridge (1), which contains a dose of liquid product (4) with an unknown volume and has an open upper end (3), into a measuring chamber (13);
   the measuring method **is characterised in that** it comprises the further steps of:

   sealing the measuring chamber (13) housing the cartridge (1) in a tight manner;
   changing the volume of the measuring chamber (13);
   determining the volume variation ($\Delta$V) of the measuring chamber (13) and/or the pressure variation ($\Delta$P) in the measuring chamber (13) due to the volume change; and
   determining the volume of the dose of liquid product (4) contained in the cartridge (1) based on the volume variation ($\Delta$V) and/or on the pressure variation ($\Delta$P) due to the volume change.

2. The measuring method according to claim 1 and comprising the further steps of:

   changing the volume of the measuring chamber (13) by means of a predetermined and known volume variation ($\Delta$V) in order to obtain an unknown pressure variation ($\Delta$P);
   determining the pressure variation ($\Delta$P) due to the volume change; and
   determining the volume of the dose of liquid product (4) contained in the cartridge (1) based on the pressure variation ($\Delta$P) due to the volume change.

3. The measuring method according to claim 1 and comprising the further steps of:

   changing the volume of the measuring chamber (13) by means of an unknown volume variation ($\Delta$V) in order to obtain a predetermined and known pressure variation ($\Delta$P);
   determining the volume variation ($\Delta$V) of the measuring chamber (13) due to the volume change; and
   determining the volume of the dose of liquid product (4) contained in the cartridge (1) based on the volume variation ($\Delta$V) due to the volume change.

4. The measuring method according to claim 1, 2 or 3, wherein the volume variation ($\Delta$V) of the measuring chamber (13) and/or the pressure variation ($\Delta$P) in the measuring chamber (13) are determined only once when the volume of the measuring chamber (13) has reached the minimum value.

5. The measuring method according to claim 1, 2 or 3, wherein the volume variation ($\Delta$V) of the measuring chamber (13) and/or the pressure variation ($\Delta$P) in the measuring chamber (13) are continuously determined during the entire volume change from a maximum volume to a minimum volume and vice versa, so as to obtain a bell-shaped variation curve.

6. The measuring method according to one of the claims from 1 to 5, wherein the volume change of the measuring chamber (13) involves changing the volume of the measuring chamber (13) from a maximum value to a minimum value, and vice versa.

7. The measuring method according to one of the claims from 1 to 6, wherein:

   the measuring chamber (13) is delimited, on one side, by a movable wall (16); and
   the volume of the measuring chamber (13) is changed by moving the movable wall (16) by means of an actuator (18).

8. The measuring method according to claim 7, wherein:

   a position sensor (19) is provided, which detects the position of the movable wall (16) and measures a variation of the position of the movable wall (16); and
   the volume variation ($\Delta$V) of the measuring chamber (13) is determined based on the variation of the position of the movable wall (16).

9. The measuring method according to claim 7 or 8, wherein:

   the measuring chamber (13) has a cylindrical shape and is delimited by a lower base wall (15) having a seat (11), which houses the cartridge (1), and by an upper base wall (16); and
   the movable wall (16) is a base wall (15, 16).

10. The measuring method according to claim 9, wherein both base walls (15, 16) are movable walls and move so as to change the volume of the measuring chamber (13).

11. The measuring method according to one of the claims from 1 to 10 and comprising the further steps of:

   determining the room temperature and/or the room humidity; and
   determining the volume of the dose of liquid product (4) contained in the cartridge (1) also based on the room temperature and/or on the room humidity.

12. The measuring method according to one of the claims from 1 to 11 and comprising the further step of carrying out, by means of sample cartridges (1) containing respective doses of liquid product (4) with a known volume, a calibration of the measuring chamber (13) so as to experimentally determine a relation between the volume of the dose of liquid product (4) contained in the cartridge (1) and the volume variation ($\Delta V$) and/or the pressure variation ($\Delta P$) due to the volume change.

13. The measuring method according to one of the claims from 1 to 12, wherein:

   the measuring chamber (13) is delimited by a lower body (10) and by an upper body, which close against one another so as to seal the measuring chamber (13) in a tight manner; the lower body (10) comprises a seat (11), which houses the cartridge (1); and the lower body (10) is carried by a conveyor (7) and moves along a path (P) going through a measuring station (S4), where the volume of liquid product (4) is determined.

14. The measuring method according to claim 13, wherein the upper body (12) is arranged inside the measuring station (S4) and is movable only vertically and perpendicularly to the path (P) of the lower body (10) to move between a raised position in which it is far from the lower body (10) and a lowered position in which it is sealingly coupled with the lower body (10).

15. A measuring station (S4) to determine the volume of liquid product (4) contained in a disposable cartridge (1) for smoking articles; the measuring station (S4) comprises:

   a measuring chamber (13), which is designed to be sealed in a tight manner and is designed to house the cartridge (1), which contains a dose of liquid product (4) with an unknown volume and has an open upper end (3);

   an actuator (18), which is designed to change the volume of the measuring chamber (13);
   a sensor (19, 20), which is designed to determine the volume variation ($\Delta V$) of the measuring chamber (13) and/or the pressure variation ($\Delta P$) in the measuring chamber (13) due to the volume change; and
   a control unit (21), which is designed to determine the volume of the dose of liquid product (4) contained in the cartridge (1) based on the volume variation ($\Delta V$) and/or on the pressure variation ($\Delta P$) due to the volume change.

**Patentansprüche**

1. Messverfahren zum Bestimmen des Volumens eines Flüssigprodukts (4), das in einer Wegwerfpatrone (1) für Rauchartikel enthalten ist;

   wobei das Messverfahren den Schritt des Einsetzens der Patrone (1), die eine Dosis des Flüssigprodukts (4) mit einem unbekannten Volumen enthält und ein offenes oberes Ende (3) hat, in eine Messkammer (13);
   wobei das Messverfahren **dadurch gekennzeichnet ist, dass** es die weiteren Schritte umfasst:

   Verschließen der Messkammer (13), die die Patrone (1) erhält, in einer dichten Weise;
   Verändern des Volumens der Messkammer (13);
   Bestimmen der Volumenänderung ($\Delta V$) der Messkammer (13) und/oder der Druckänderung ($\Delta P$) in der Messkammer (13) aufgrund der Volumenveränderung; und
   Bestimmen des Volumens der Dosis des Flüssigprodukts (4), das in der Patrone (1) enthalten ist, auf der Basis der Volumenänderung ($\Delta V$) und/oder der Druckänderung ($\Delta P$) aufgrund der Volumenveränderung.

2. Messverfahren nach Anspruch 1, umfassend die weiteren Schritte:

   Verändern des Volumens der Messkammer (13) mittels einer vorbestimmten und bekannten Volumenänderung ($\Delta V$), um eine unbekannte Druckänderung ($\Delta P$) zu erzielen;
   Bestimmen der Druckänderung ($\Delta P$) aufgrund der Volumenveränderung; und
   Bestimmen des Volumens der Dosis des Flüssigprodukts (4), das in der Patrone (1) enthalten ist, auf der Basis der durch die Volumenveränderung bedingten Druckänderung ($\Delta P$).

3. Messverfahren nach Anspruch 1, umfassend die weiteren Schritte:

> Verändern des Volumens der Messkammer (13) mittels einer unbekannten Volumenänderung ($\Delta V$), um eine vorbestimmte und bekannte Druckänderung ($\Delta P$) zu erzielen;
> Bestimmen der durch die Volumenveränderung bedingten Volumenänderung ($\Delta V$) der Messkammer (13); und
> Bestimmen des Volumens der Dosis des Flüssigprodukts (4), das in der Patrone (1) enthalten ist, auf der Basis der durch die Volumenveränderung bedingten Volumenänderung ($\Delta V$).

4. Messverfahren nach Anspruch 1, 2 oder 3, wobei die Volumenänderung ($\Delta V$) der Messkammer (13) und/oder die Druckänderung ($\Delta P$) in der Messkammer (13) nur einmal bestimmt werden, wenn das Volumen der Messkammer (13) den minimalen Wert erreicht hat.

5. Messverfahren nach Anspruch 1, 2 oder 3, wobei die Volumenänderung ($\Delta V$) der Messkammer (13) und/oder die Druckänderung ($\Delta P$) in der Messkammer (13) während der gesamten Volumenveränderung von einem maximalen Volumen zu einem minimalen Volumen und umgekehrt kontinuierlich bestimmt werden, um eine glockenförmige Änderungskurve zu erhalten.

6. Messverfahren nach einem der Ansprüche 1 bis 5, wobei die Volumenveränderung der Messkammer (13) die Veränderung des Volumens der Messkammer (13) von einem Maximalwert zu einem Minimalwert und umgekehrt beinhaltet.

7. Messverfahren nach einem der Ansprüche 1 bis 6, wobei:

> die Messkammer (13) auf einer Seite durch eine bewegliche Wand (16) begrenzt ist; und
> das Volumen der Messkammer (13) durch Bewegen der beweglichen Wand (16) mittels eines Aktuators (18) verändert wird.

8. Messverfahren nach Anspruch 7, wobei:

> ein Positionssensor (19) vorgesehen ist, der die Position der beweglichen Wand (16) detektiert und eine Änderung der Position der beweglichen Wand (16) misst; und
> die Volumenänderung ($\Delta V$) der Messkammer (13) auf der Basis der Änderung der Position der beweglichen Wand (16) bestimmt wird.

9. Messverfahren nach Anspruch 7 oder 8, wobei:

> die Messkammer (13) eine zylindrische Form hat und durch eine untere Basiswand (15), die eine Aufnahme (11) hat, die die Patrone (1) aufnimmt, und durch eine obere Basiswand (16) begrenzt ist; und
> die bewegliche Wand (16) eine Basiswand (15, 16) ist.

10. Messverfahren nach Anspruch 9, wobei beide Basiswände (15, 16) bewegliche Wände sind und sich bewegen, um das Volumen der Messkammer (13) zu verändern.

11. Messverfahren nach einem der Ansprüche 1 bis 10, und umfassend die weiteren Schritte:

> Bestimmen der Raumtemperatur und/oder der Raum-Luftfeuchtigkeit; und
> Bestimmen des Volumens der Dosis des Flüssigprodukts (4), das in der Patrone (1) enthalten ist, auch auf der Basis der Raumtemperatur und/oder der Raum-Luftfeuchtigkeit.

12. Messverfahren nach einem der Ansprüche 1 bis 11, und umfassend die weiteren Schritte des Ausführens einer Kalibrierung der Messkammer (13) mittels Probekartuschen (1), die entsprechende Dosen des Flüssigprodukts (4) mit einem bekannten Volumen enthalten, um eine Beziehung zwischen dem Volumen der Dosis des Flüssigprodukts (4), das in der Patrone (1) enthalten ist, und der Volumenänderung ($\Delta V$) und/oder der Druckänderung ($\Delta P$) aufgrund der Volumenveränderung experimentell zu bestimmen.

13. Messverfahren nach einem der Ansprüche 1 bis 12, wobei:

> die Messkammer (13) durch einen unteren Körper (10) und durch einen oberen Körper begrenzt ist, die dicht gegeneinander anliegen, um die Messkammer (13) in einer dichten Weise zu verschließen;
> der untere Körper (10) eine Aufnahme (11) umfasst, die die Patrone (1) aufnimmt; und
> der untere Körper (10) durch einen Förderer (7) getragen wird und sich längs eines Pfads (P) bewegt, der durch eine Messstation (S4) verläuft, wo das Volumen des Flüssigprodukts (4) bestimmt wird.

14. Messverfahren nach Anspruch 13, wobei der obere Körper (12) in der Messstation (S4) angeordnet ist und nur vertikal und senkrecht zum Pfad (P) des unteren Körpers (10) bewegbar ist, um sich zwischen einer angehobenen Position, in der er vom unteren Körper (10) weit entfernt ist, und einer abgesenkten Position, in der er mit dem unteren Körper (10) dicht gekoppelt ist, zu bewegen.

**15.** Messstation (S4) zum Bestimmen des Volumens des Flüssigprodukts (4), das in einer Wegwerfpatrone (1) für Rauchartikel enthalten ist; wobei die Messstation (S4) umfasst:

eine Messkammer (13), die so ausgelegt ist, um in einer dichten Weise verschlossen zu werden, und ausgelegt ist, um die Patrone (1) aufzunehmen, die eine Dosis des Flüssigprodukts (4) mit einem unbekannten Volumen enthält und ein offenes oberes Ende (3) aufweist;
einen Aktuator (18), der ausgelegt ist, um das Volumen der Messkammer (13) zu verändern;
einen Sensor (19, 20), der ausgelegt ist, um die Volumenänderung (ΔV) der Messkammer (13) und/oder die Druckänderung (ΔP) der Messkammer (13), die durch die Volumenveränderung bedingt sind, zu bestimmen; und
eine Steuereinheit (21), die ausgelegt ist, um das Volumen der Dosis des Flüssigprodukts (4), das in der Patrone (1) enthalten ist, auf der Basis der Volumenänderung (ΔV) und/oder der Druckänderung (ΔP), die durch die Volumenveränderung bedingt sind, zu bestimmen.

**Revendications**

**1.** Méthode de mesure pour déterminer le volume d'un produit liquide (4) contenu dans une cartouche jetable (1) pour des articles à fumer ;
la méthode de mesure comprend l'étape d'insertion de la cartouche (1), qui contient une dose de produit liquide (4) de volume inconnu et présente une extrémité supérieure (3) ouverte, dans une chambre de mesure (13) ; la méthode de mesure est **caractérisée en ce qu'elle** comprend les étapes supplémentaires suivantes :

la fermeture hermétique de la chambre de mesure (13) logeant la cartouche (1) de manière étanche ;
le changement du volume de la chambre de mesure (13) ;
la détermination de la variation de volume (ΔV) de la chambre de mesure (13) et/ou de la variation de pression (ΔP) dans la chambre de mesure (13) due au changement de volume ; et
la détermination du volume de la dose de produit liquide (4) contenue dans la cartouche (1) sur la base de la variation de volume (ΔV) et/ou de la variation de pression (ΔP) due au changement de volume.

**2.** Méthode de mesure selon la revendication 1 et comprenant les étapes supplémentaires suivantes :

le changement du volume de la chambre de mesure (13) au moyen d'une variation de volume (ΔV) prédéterminée et connue afin d'obtenir une variation de pression (ΔP) inconnue ;
la détermination de la variation de pression (ΔP) due au changement de volume ; et
la détermination du volume de la dose de produit liquide (4) contenue dans la cartouche (1) sur la base de la variation de pression (ΔP) due au changement de volume.

**3.** Méthode de mesure selon la revendication 1 et comprenant les étapes supplémentaires suivantes :

le changement du volume de la chambre de mesure (13) au moyen d'une variation de volume (ΔV) inconnue afin d'obtenir une variation de pression (ΔP) prédéterminée et connue ;
la détermination de la variation de volume (ΔV) de la chambre de mesure (13) due au changement de volume ; et
la détermination du volume de la dose de produit liquide (4) contenue dans la cartouche (1) sur la base de la variation de volume (ΔV) due au changement de volume.

**4.** Méthode de mesure selon la revendication 1, 2 ou 3, dans laquelle la variation de volume (ΔV) de la chambre de mesure (13) et/ou la variation de pression (ΔP) dans la chambre de mesure (13) sont déterminées une seule fois lorsque le volume de la chambre de mesure (13) a atteint la valeur minimale.

**5.** Méthode de mesure selon la revendication 1, 2 ou 3, dans laquelle la variation de volume (ΔV) de la chambre de mesure (13) et/ou la variation de pression (ΔP) dans la chambre de mesure (13) sont déterminées en continu pendant toute la variation de volume à partir d'un volume maximal jusqu'à un volume minimal et vice versa, afin d'obtenir une courbe de variation en forme de cloche.

**6.** Méthode de mesure selon l'une des revendications 1 à 5, dans laquelle le changement de volume de la chambre de mesure (13) implique le changement du volume de la chambre de mesure (13) à partir d'une valeur maximale jusqu'à une valeur minimale, et vice versa.

**7.** Méthode de mesure selon l'une des revendications 1 à 6, dans laquelle :

la chambre de mesure (13) est délimitée, d'un côté, par une paroi mobile (16) ; et
le volume de la chambre de mesure (13) est modifié en déplaçant la paroi mobile (16) au moyen d'un actionneur (18).

**8.** Méthode de mesure selon la revendication 7, dans laquelle :

un capteur de position (19) est fourni, lequel détecte la position de la paroi mobile (16) et mesure une variation de la position de la paroi mobile (16) ; et
la variation de volume ($\Delta V$) de la chambre de mesure (13) est déterminée sur la base de la variation de la position de la paroi mobile (16).

**9.** Méthode de mesure selon la revendication 7 ou 8, dans laquelle :

la chambre de mesure (13) présente une forme cylindrique et est délimitée par une paroi inférieure de base (15) comportant un siège (11), qui loge la cartouche (1), et par une paroi supérieure de base (16) ; et
la paroi mobile (16) est une paroi de base (15, 16).

**10.** Méthode de mesure selon la revendication 9, dans laquelle les deux parois de base (15, 16) sont des parois mobiles et se déplacent de manière à modifier le volume de la chambre de mesure (13).

**11.** Méthode de mesure selon l'une des revendications 1 à 10 et comprenant les étapes supplémentaires suivantes :

la détermination de la température ambiante et/ou de l'humidité ambiante ; et
la détermination du volume de la dose de produit liquide (4) contenue dans la cartouche (1) également sur la base de la température ambiante et/ou de l'humidité ambiante.

**12.** Méthode de mesure selon l'une des revendications 1 à 11 et comprenant l'étape supplémentaire de mise en œuvre, au moyen de cartouches d'échantillons (1) contenant des doses respectives de produit liquide (4) de volume connu, d'un étalonnage de la chambre de mesure (13) de manière à déterminer expérimentalement une relation entre le volume de la dose de produit liquide (4) contenue dans la cartouche (1) et la variation de volume ($\Delta V$) et/ou la variation de pression ($\Delta P$) due au changement de volume.

**13.** Méthode de mesure selon l'une des revendications 1 à 12, dans laquelle :

la chambre de mesure (13) est délimitée par un corps inférieur (10) et par un corps supérieur, qui se referment l'un contre l'autre de manière à fermer hermétiquement la chambre de mesure (13) de manière étanche ;
le corps inférieur (10) comprend un siège (11), lequel loge la cartouche (1) ; et
le corps inférieur (10) est porté par un transporteur (7) et se déplace le long d'un trajet (P) passant par une station de mesure (S4), où le volume de produit liquide (4) est déterminé.

**14.** Méthode de mesure selon la revendication 13, dans laquelle le corps supérieur (12) est agencé à l'intérieur de la station de mesure (S4) et peut se déplacer uniquement verticalement et perpendiculairement sur le trajet (P) du corps inférieur (10) pour se déplacer entre une position haute où il est éloigné du corps inférieur (10) et une position basse où il est couplé de manière étanche au corps inférieur (10).

**15.** Station de mesure (S4) pour déterminer le volume de produit liquide (4) contenu dans une cartouche jetable (1) pour articles à fumer ; la station de mesure (S4) comprend :

une chambre de mesure (13), qui est conçue pour être fermée hermétiquement de manière étanche et est conçue pour loger la cartouche (1), qui contient une dose de produit liquide (4) de volume inconnu et présente une extrémité supérieure (3) ouverte ;
un actionneur (18), qui est conçu pour modifier le volume de la chambre de mesure (13) ;
un capteur (19, 20), qui est conçu pour déterminer la variation de volume ($\Delta V$) de la chambre de mesure (13) et/ou la variation de pression ($\Delta P$) dans la chambre de mesure (13) due au changement de volume ; et
une unité de commande (21), qui est conçue pour déterminer le volume de la dose de produit liquide (4) contenu dans la cartouche (1) sur la base de la variation de volume ($\Delta V$) et/ou de la variation de pression ($\Delta P$) due au changement de volume.

Fig. 1

Fig.2

Fig.3

Fig.4

Fig.5

EP 3 746 751 B1

Fig.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015140768 A1